(19) Europäisches Patentamt
European Patent Office
Office européen des brevets

(11) **EP 2 505 679 B1**

(12) **EUROPEAN PATENT SPECIFICATION**

(45) Date of publication and mention of the grant of the patent:
**05.06.2013 Bulletin 2013/23**

(51) Int Cl.:
*C22C 9/00* *(2006.01)*      *C22C 9/02* *(2006.01)*
*B60M 1/13* *(2006.01)*

(21) Application number: **10810762.4**

(22) Date of filing: **24.11.2010**

(86) International application number:
**PCT/ES2010/070773**

(87) International publication number:
**WO 2011/064434 (03.06.2011 Gazette 2011/22)**

(54) **HIGH PERFORMANCE COPPER ALLOY**

KUPFER-HOCHLEISTUNGSLEGIERUNG

ALLIAGE DE CUIVRE À PERFORMANCES ÉLEVÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.11.2009 ES 200931047**

(43) Date of publication of application:
**03.10.2012 Bulletin 2012/40**

(73) Proprietor: **La Farga Lacambra, S.A.U.**
**08509 Las Masies De Voltregá (ES)**

(72) Inventors:
• **GARCÍA ZAMORA, Miguel**
**E-08180 Moia (ES)**

• **FERRER CRUSELLAS, Núria**
**E-08570 Torelló (ES)**
• **RIERA FONTANA, Lluis**
**E-08004 Barcelona (ES)**
• **ESPIELL ALVAREZ, Fernando**
**E-08028 Barcelona (ES)**
• **SEGARRA RUBÍ, Mercé**
**E-08014 Barcelona (ES)**

(74) Representative: **Carvajal y Urquijo, Isabel et al**
**Clarke, Modet & Co.**
**c/ Goya, 11**
**28001 Madrid (ES)**

(56) References cited:
**EP-A2- 0 702 375       US-A- 5 705 125**
**US-A1- 2005 161 129    US-A1- 2006 157 167**

**Description**

**Object of the invention**

The present invention refers to a copper alloy featuring high mechanical properties without important detriment to electrical conductivity, a much higher recrystallization temperature than that of conventional pure copper, excellent resistance to abrasion wear as well as low creep.

The present invention is particularly suitable in the manufacturing of grooved contact wires for power supply systems, of the flexible or rigid aerial catenary type, for urban and inter-city electric traction railroads, in low and high speed railroad lines.

**Background of the invention**

Besides having high electrical conductivity, the materials used for the manufacturing of contact wires for high speed railroad lines must have high mechanical properties to stand the stress the contact wire is subject to. This stress is a critical parameter as it defines the propagation speed of the elastic wave along the wire; the greater the stress is, the smaller the oscillating movement will be.

The catenary vibrates when the train moves, and if the train speed were to come close or exceed the wave propagation speed within the catenary, said catenary would be disconnected, interrupting the electric flux. It is necessary that the train speed is clearly lower than that of the wave c propagation.

$$c = \sqrt{\sigma/\rho}$$

Where $\sigma$ is the contact wire stress in N/mm$^2$ and $\rho$ is the density of the material in kg/m$^3$. Therefore, in a high speed line the mechanical stress to which the contact wire is subject must be very high and thus the contact wire tensile strength must be very high to endure such stress.

One of the materials traditionally used in the manufacturing of contact wires for conventional railroad lines is Electrolytic Tough-Pitch copper, known as CuETP. Due to its high purity in copper (99.99%), this material has an excellent electrical conductivity, around 100% IACS (International Annealed Copper Standard), but a poor tensile strength, around 360-370N/mm$^2$. Also, CuETP has a very low recrystallization temperature, around 200º C, it features creep at relatively low temperature and high abrasion wear at the passage of pantographs.

CuAg0.1 alloy, with 0.1% silver, is another of the materials used in railroad lines, particularly in high speed ones. This alloy has the same electrical and mechanical properties as CuETP, but it offers a high recrystallization temperature of 340ºC and much higher resistance to abrasion wear than conventional CuETP.

CuMg0.2 and CuMg0.5 alloys, with 0.2% and 0.5% magnesium, have high mechanical properties ranging from 440 to 500N/mm$^2$, respectively, high recrystallization temperature of 420ºC and excellent resistance to wear; however, all that is in detriment to electrical conductivity which is reduced to 65%/IACS. This low electrical conductivity forces to install more substations along the line or to increase the contact wire section to reduce intensity losses. Also, the CuMg alloy manufacturing process is very complex due to the high reactivity of magnesium with ambient oxygen and it is very hard to manipulate during the contact wire manufacturing process due to its great hardness.

The copper alloy of the present invention, which can be obtained through continuous casting process, has high mechanical properties without serious detriment to electrical conductivity, which makes it particularly suitable for the manufacturing of contact wires for high speed railroad lines and in general all applications where materials with high mechanical and thermal properties are required. Specifically, its properties are at a middle point between CuETP and CuMg alloys, improving the CuAg. The copper alloy of the present invention has high electrical conductivity between 85 and 90%IACS, high tensile strength of around 400N/mm$^2$, high recrystallization temperature at 380ºC, low creep in high stress and temperature conditions and high resistance to wear.

**Description of the invention**

The copper alloy of the present invention, hereunder called EVELEC (evolutioned electrification), consists of adding multiple chemical elements, in concentrations ranging from 0.001 to 0.161% atomic weight, to high purity copper. Said chemical elements comprise:

- a group of metallic elements formed by Zn, Pb, Sn, Ni and Ag;

- a group of semimetallic elements or metalloids formed by Sb and As; and
- oxygen.

Specifically, each one of the aforementioned essential chemical elements is within the concentration ranges in atomic weight % shown in table I below.

TABLE I

| Element | Zn | Pb | Sn | Ni |
|---|---|---|---|---|
| Concentration range (%) | 0.002 - 0.010 | 0.009 - 0.021 | 0.054 - 0.161 | 0.005 - 0.043 |
| TABLE I Continuation | | | | |
| Element | Ag | Sb | As | O |
| Concentration range (%) | 0.002 - 0.012 | 0.001 - 0.003 | 0.001 - 0.002 | 0.060 - 0.119 |

The EVELEC copper alloy enables to obtain a contact wire with a recrystallization temperature and mechanical properties which are much higher than those of CuETP and even those of the CuAg0.1 alloy, as shown in the comparison in table II, corresponding to the embodiment example detailed below.

Also, it is particularly worth highlighting the resistance to wear and the low creep offered by the EVELEC copper alloy, which are much better than those of Cu-ETP, as it can also be seen in the embodiment example.

**Brief description of the drawings**

The following is a brief description of a series of drawings which will help understand the invention better relating to a non-limiting example thereof.

Figure 1 shows the results obtained in an accelerated wear test of a 150mm$^2$ grooved contact wire manufactured with the alloy of the present invention and its comparison with other alloys.

Figures 2 shows the results obtained in a creep test of a 150mm$^2$ grooved contact wire manufactured with the alloy of the present invention and its comparison with other alloys.

**Examples**

The following example is shown as a non-limiting embodiment of the present invention, which is used to compare the performances of the EVELEC copper alloy vis-à-vis the standardized copper alloys in the railroad field.

The example corresponds to a 150mm$^2$ grooved contact wire for railroad use manufactured with the copper alloy of the present invention, the chemical composition of which is shown in table I.

The results of the main mechanical, electrical and thermal properties of the contact wire of the present example are shown in table II, comparing the results of said properties corresponding to the standardized alloys in the market.

TABLE II

| Material | Electrical conductivity (%IACS) | Tensile strength (N/mm$^2$) | Elastic limit (N/mm$^2$) | Recrystallization temperature (ºC) |
|---|---|---|---|---|
| Cu-ETP | 99.5 | 370 | 356 | 220 |
| Cu-Ag0.1 | 98.7 | 370 | 360 | 340 |
| EVELEC | 87.2 | 405 | 374 | 380 |
| Cu-Mg0.2 | 77.8 | 440 | 432 | 410 |
| Cu-Mg0.5 | 60.5 | 500 | 440 | 420 |

It is particularly worth highlighting the high mechanical properties offered by the EVELEC copper alloy vis-à-vis those of Cu-ETP and CuAg0.1, as well as the higher recrystallization temperature. Specifically, the contact wire of the present invention offers a tensile strength 35N/mm$^2$ higher than the Cu-ETP and CuAg0.1 alloys, which means that it resists 10% more load, and a recrystallization temperature 160º C higher than the Cu-ETP alloy and 40º C higher than the CuAg0.1 alloy. As regards this last aspect, it is important to mention that in a high speed railroad line the contact wire can suffer Joule heating due to the heat release generated by the passage of great electrical intensities (Joule effect), for this reason it is very important that the contact wire installed in lines with heavy traffic have a high recrystallization temperature.

It is also worth highlighting the high wear resistance of the alloy of the present invention. To evaluate the wear, the contact wire of the present example is subjected to an accelerated wear test, comparatively, under the same service conditions, with a grooved contact wire manufactured with CuETP.

Wear is evaluated through two types of work conditions, which can be seen in table III, where $v$ is the speed at which the pantograph passes, F is the contact force between the contact wire and the pantograph and $I$ is the current intensity circulating through them.

TABLE III

|  | v (km/h) | F (N) | I (A) |
|---|---|---|---|
| Type 1 | 120 | 80 | 100 |
| Type 2 | 120 | 120 | 200 |

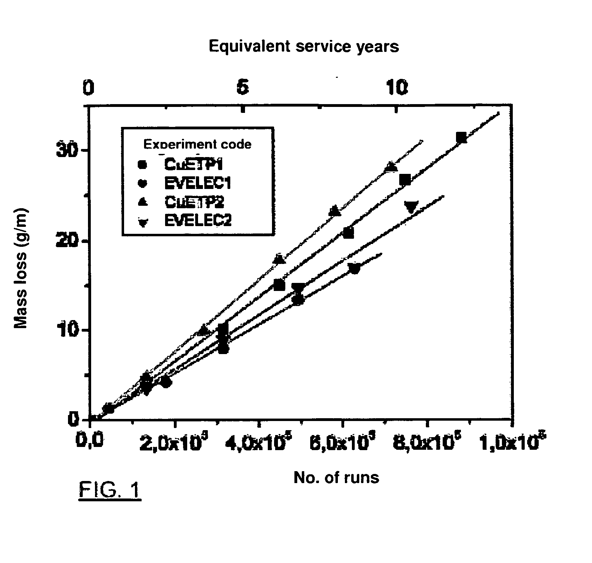

The results obtained in the accelerated wear tests are shown in figure 1, through a chart showing the mass loss of the contact wire according to the number of runs of the pantograph.

The contact wire of the present example endures wear between 30 and 50% lower than the contact wire manufactured with CuETP. Also, it is highlighted that the more demanding the test conditions are, more stress and more intensity, the better the wear results for the EVELEC copper alloy.

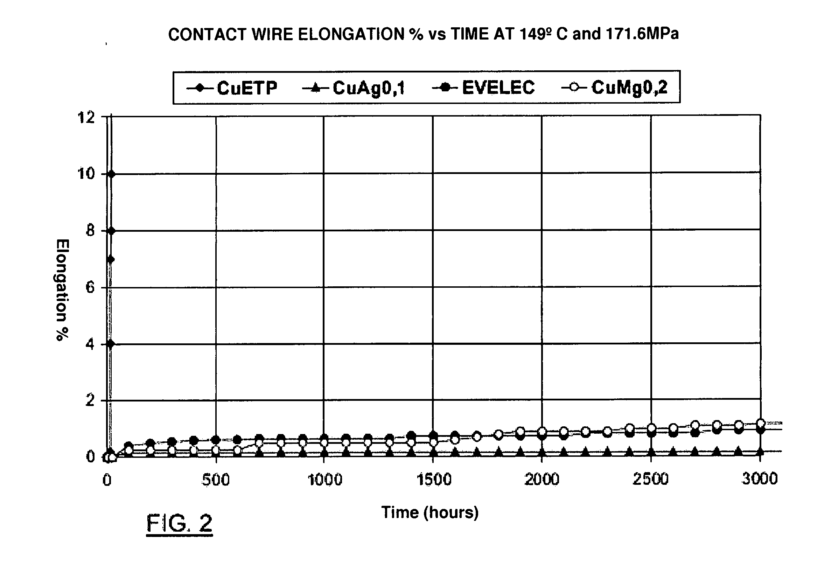

Also, the results as regards creep of the copper alloy of the present invention shown in figure 2 are particularly interesting. The copper alloy of the present example, when subjected to a stress of 172Mpa and a 149ºC temperature during a long period of time barely experiments viscoelastic creep. These test conditions are equivalent to the service conditions of a contact wire installed in a heavy traffic line, where a heating of the wire is produced due to the high number of trains passing through them. Figure 2 shows the excellent behaviour of the EVELEC copper alloy, showing that it does not show creep in conditions of high temperature (149ºC) and stress (172N/mm$^2$) during a long period of time (3200 hours). Its behaviour is the same as that of CuMg0.2 and CuAg0.1 alloys and much higher than that of CuETP alloy, which is why CuETP is not suitable to be used in high speed railroad lines.

**Claims**

1.  High performance copper alloy **characterized in that** it consists of adding multiple chemical elements in concentrations ranging from 0.001 to 0.161% of atomic weight to high purity copper, where said chemical elements comprise:

    - a group of metallic elements formed by Zn, Pb, Sn, Ni and Ag;
    - a group of semimetallic elements or metalloids formed by Sb and As; and
    - oxygen.

2.  High performance copper alloy according to claim 1 **characterized in that** the concentrations of the chemical elements are within the following ranges in % in atomic weight:

    - 0,002-0,010% of Zn;
    - 0,009-0,021% of Pb;
    - 0,054-0,161% of Sn;
    - 0,005-0,043% of Ni;
    - 0,002-0,012% of Ag;
    - 0,001-0,003% of Sb;
    - 0,001-0,002% of As;
    - 0,060-0,119% of oxygen.

3.  Use of the high performance copper alloy according to any of the claims 1 to 2, for the manufacturing of wires through continuous casting which require high mechanical, electrical and thermal properties.

4.  Use of the high performance copper alloy according to any of the claims 1 to 3, for the manufacturing of grooved

**EP 2 505 679 B1**

contact wires for electric traction railroads.

**Patentansprüche**

1. Hochleistungs-Kupferlegierung, **dadurch gekennzeichnet, dass** sie sich aus der Zugabe mehrerer chemischer Elemente in Konzentrationen im Bereich von 0,001 bis 0,161% Atomgewicht zu hochreinem Kupfer zusammensetzt, wo besagte chemische Elemente:

   - eine durch Zn, Pb, Sn, Ni und Ag gebildete Gruppe von metallischen Elementen;
   - eine durch Sb und As gebildete Gruppe von halbmetallischen Elementen oder Nichtmetallen; und
   - Sauerstoff

   umfassen.

2. Hochleistungs-Kupferlegierung nach Anspruch 1, **dadurch gekennzeichnet, dass** die Konzentrationen der chemischen Elemente in folgenden Bereichen in % Atomgewicht liegen:

   - 0,002-0,010% von Zn;
   - 0,009-0,021% von Pb;
   - 0,054-0,161% von Sn;
   - 0,005-0,043% von Ni;
   - 0,002-0,012% von Ag;
   - 0001-0003% von Sb;
   - 0,001-0,002% von As;
   - 0,060-0,119% von Sauerstoff.

3. Verwendung der Hochleistungs-Kupferlegierung nach einem der Ansprüche 1 bis 2 zur Herstellung von Drähten durch Stranggießen, welche hohe mechanische, elektrische und thermische Eigenschaften erfordern.

4. Verwendung der Hochleistungs-Kupferlegierung nach einem der Ansprüche 1 bis 3 zur Herstellung von genuteten Fahrdrähten für Eisenbahnen mit elektrischer Zugförderung.

**Revendications**

1. Alliage de cuivre à haute performance **caractérisé en ce qu'**il consiste en l'ajout d'éléments chimiques multiples, dans des concentrations qui vont d'un 0,001 à un 0,161 % en poids atomique, au cuivre haute pureté, dans lequel lesdits éléments chimiques comprennent :

   - un groupe d'éléments métalliques formé par du Zn, Pb, Sn, Ni et Ag ;
   - un groupe d'éléments semi-métalliques ou des métalloïdes formé par Sb et As ; et
   - de l'oxygène.

2. Alliage de cuivre à haute performance selon la revendication 1 **caractérisé en ce que** les concentrations des éléments chimiques sont comprises dans les gammes suivantes, exprimés en % en poids atomique :

   - 0,002-0,010 % de Zn ;
   - 0,009-0,021 % de Pb ;
   - 0,054-0,161 % de Sn ;
   - 0,005-0,043 % de Ni ;
   - 0,002-0,012 % d'Ag ;
   - 0,001-0,003 % de Sb ;
   - 0,001-0,002 % d'As ;
   - 0,060-0,119% d'As ;

3. Emploi d'un alliage de cuivre à haute performance selon l'une quelconque des revendications 1 à 2, pour la fabrication de fils par coulée continue, ce qui nécessite des propriétés mécaniques, électriques et thermiques très élevées.

4. Emploi de l'alliage de cuivre à haute performance selon l'une quelconque des revendications 1 à 3, pour la fabrication de fils de contact rainurés pour des chemins de fer à traction électrique.

FIG. 1

CONTACT WIRE ELONGATION % vs TIME AT 149º C and 171.6MPa

FIG. 2

EP 2 505 679 B1